# EUROPEAN PATENT SPECIFICATION

(11) **EP 2 560 435 B1**
(45) Date of publication and mention of the grant of the patent: **09.08.2017**
(21) Application number: 11768377.1
(22) Date of filing: 21.02.2011
(51) Int. Cl.: H04W 36/00, H04L 9/00, H04W 12/04

(54) **METHOD AND SYSTEM FOR IMPLEMENTING SECURITY OF SINGLE RADIO VOICE CALL CONTINUITY**
VERFAHREN UND SYSTEM ZUR HERSTELLUNG DER SICHERHEIT EINER FUNKSPRACHANRUFKONTINUITÄT
PROCÉDÉ ET SYSTÈME POUR METTRE EN OEUVRE LA SÉCURITÉ DE CONTINUITÉ D'UN APPEL RADIOTÉLÉPHONIQUE UNIQUE

(30) Priority: 15.04.2010 CN 201010148710
(43) Date of publication of application: 20.02.2013
(73) Proprietor: ZTE Corporation, Shenzhen, Guangdong 518057 (CN)
(72) Inventor: TIAN, Tian, Shenzhen, Guangdong 518057 (CN); ZHU, Yunwen, Shenzhen, Guangdong 518057 (CN); WEI, Yinxing, Shenzhen, Guangdong 518057 (CN); GAO, Feng, Shenzhen, Guangdong 518057 (CN)
(74) Representative: D'Halleweyn, Nele Veerle Trees Gertrudis
(86) International application number: PCT/CN2011/071123
(87) International publication number: WO 2011/127765

(56) References cited:
- WO-A1-00/76194
- WO-A1-2008/058877
- WO-A2-2008/023162
- CN-A- 101 459 940
- CN-A- 101 594 647
- US-A1- 2008 072 310
- "3 rd Generation Partnership Project; Technical Specification Group Services and System Aspects; IP Multimedia Subsystem (IMS) media plane security (Release 9)", 3GPP STANDARD; 3GPP TR 33.828, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 6 April 2010 (2010-04-06), pages 1-81, XP050402474, [retrieved on 2010-04-06]
- 3GPP TR 33.828 V9.0.0 31 March 2010, pages 47-48, - 62-64 - 64, XP050402474

## Description

### Technical Field

The present invention relates to communication network security technology, and particularly, to a method and system for implementing security of Single Radio Voice Call Continuity (SRVCC) in an IP Multimedia Subsystem (IMS).

### Background of the Related Art

Based on the requirements of mobile operators on the wireless broadband with high rate and low delay, an Release 8 (R8) standard of the 3rd Generation Partnership Project (3GPP) puts forward an evolution architecture of Evolved Packet System (EPS) network, which includes a radio network and a core network. The radio network is an Evolved Universal Terrestrial Radio Access Network (E-UTRAN) and uses Long Term Evolution (LTE) access. An SRVCC scheme mainly solves existing problems when an LTE network deploys Voice over Internet Protocol (VoIP) services.

When the LTE does not reach the coverage area of whole network, with the movement of a user, the ongoing VoIP services will face the problem of voice continuity after being out of the LTE scope, at the point, when the user subscribes to an SRVCC/SC service, a Serving-Call Session Control Function (S-CSCF) anchors a signaling path in a Service Centralization and Continuity (SCC) server located in an IMS network according to subscriptions of the user in a Home Subscriber Server (HSS), and the SRVCC service can switch voices to Circuit Switched (CS), thereby guaranteeing no-break voice calls.

Currently, the SRVCC only has handover demands from the LTE to CS and does not have reverse demands temporarily. The SRVCC scheme is implemented based on the IMS, thus, the IMS is required to be deployed in the network, and the SRVCC needs to be used in a specific scenario after there are VoIP services in the EPS network.

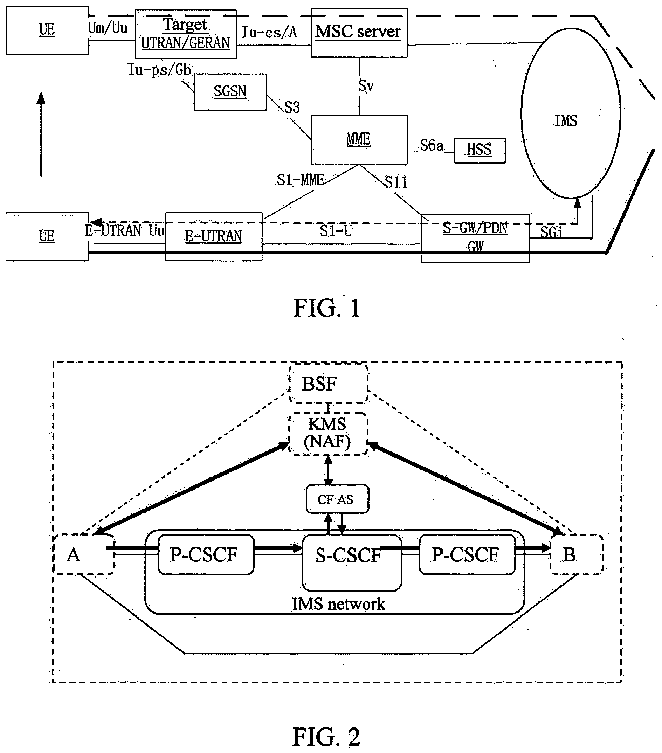

FIG. 1 illustrates a diagram of system architecture of the existing single radio voice call continuity. Wherein, UTRAN/GSM EDGE Radio Access Network (UTRAN/GERAN) is mainly used for network access of 3G/2G Circuit Switched (CS) domain; a Source Mobile Switch Center (Source MSC) is mainly used for the user plane and signaling exchange function of the user in a source circuit switched network; and an enhanced Mobile Switch Center (eMSC) is used to help a User Equipment (UE) complete the voice continuity between the CS domain and a Packet Switch (PS) domain, and the eMSC and Source MSC can be deployed as the same network element.

Wherein, the E-UTRAN is used for implementing all radio functions related to the evolved network.

A Mobility Management Entity (MME) is responsible for control plane mobility managements which include the user context and movement state management and allocating a temporary user identity and so on.

A Serving Gateway (S-GW) entity is a user plane entity, which is responsible for routing processing of user plane data.

A Packet Data Network Gateway (PDN GW or P-GW) is responsible for the gateway function for the UE accessing a Packet Data Network (PDN). The P-GW and S-GW can be set in one physical entity together.

A Serving GPRS Supporting Node (SGSN) is mainly used for completing functions such as the routing and forwarding of packet data package, mobility management, session management, logical link management, authentication and encryption, call ticket generation and output and so on.

The Home Subscriber Server (HSS) is used for storing user subscription information.

A safe Key Management Server (KMS) scheme of an IMS media plane in the existing 3GPP TS33.328 is used to perform secure communication between a calling party A (UE-A) and a called party B.

FIG. 2 is a schematic diagram of solution architecture for IMS media security based on a Key Management Server (KMS) in the related art, wherein, a user A and a user B are a sending party and a receiving party of media information respectively; the KMS, as a trusted third party, implements functions of key management and key distribution; a Proxy-CSCF (P-CSCF) and the S-CSCF are network elements of the IMS network; and refer to the 3GPP TS23.228 for function introductions of other network elements in FIG. 2.

All users and Application Servers (AS) in FIG. 2 establish trust relationships with the KMS through a Generic Bootstrapping Architecture (GBA) mode and establish shared keys with the KMS through a key negotiation protocol, and if a GBA can not be used, the users can use other authentication methods and KMSs to obtain the shared keys.

In procedures of methods for solving the security in all scenarios below, GBA processes will not be illustrated in the figures any more, and when no special instruction is made, in the drawing examples of all the solutions, the shared keys between user terminals A, B, C, MSC, SCC AS and the KMS are respectively Ka, Kb, Kc, Km and Kas, and secure channels are all established between the user terminals A, B, C, MSC, SCC AS and the KMS, and introductions of checking the integrity of messages are omitted in the examples, and corresponding GBA identities are BTIDa, BTIDb, BTIDc, BTIDm, BTIDas. In order to make the procedure look simpler, the messages and required parameters of the messages, such as HDR, T and V and so on, identical with that in the related art are omitted in the specific procedures.

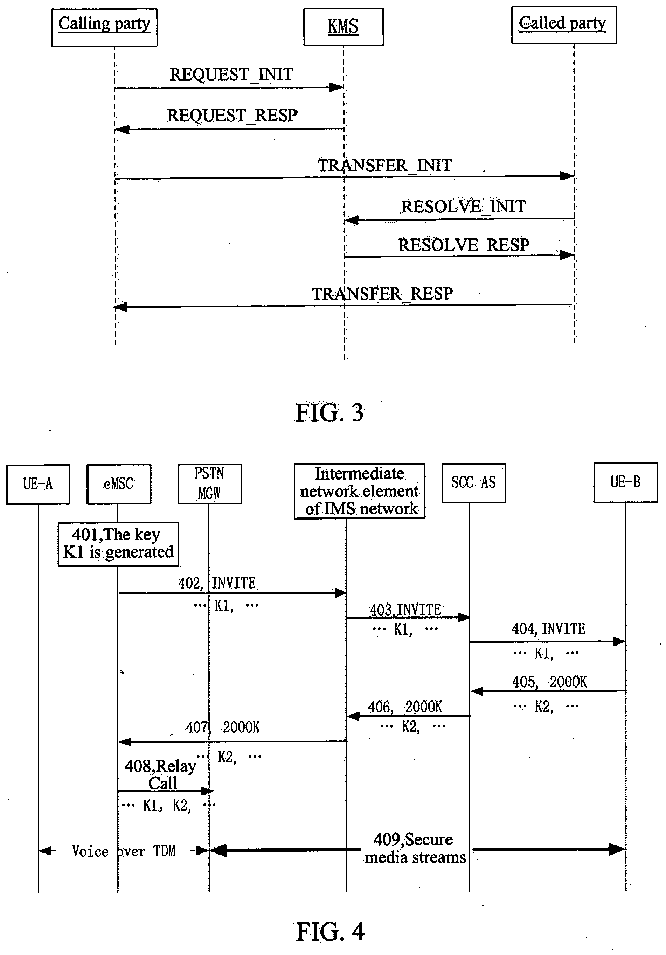

The process of scheme is described in short as follows, and the procedure is shown in FIG. 3. The calling party in the session firstly requests the KMS for relevant keys and one ticket, and the relevant keys obtained by the calling party requesting the KMS are encrypted and included in this ticket. After obtaining the ticket including the relevant keys, the calling party sends the ticket to the called party; since the called party can not decrypt the ticket to obtain information included in the ticket, the called party continues to send the ticket to the KMS, and the KMS decrypts the ticket and returns the relevant keys therein to the called party.

The ticket which the calling party applies for is based on a public user identity of the called party, and identities of the calling party and the called party are included in the ticket generated by the KMS, and after receiving the ticket sent from a responding party to the KMS, the KMS will judge by comparison whether the identity of the called party included in the responding party and the identity of the called party included in the ticket are identical to judge whether a responding user is a legal valid user.

When the calling party A needs to perform handover due to the problem of voice quality, and after the handover is performed to the CS network, the eMSC initiates a new session request to the SCC server, and since no media plane security protection for this scenario exists in the related art, the user A will not be able to continue to perform secure communication after the handover occurs.

The document "3rd Generation Partnership Project; Technical Specification Group Services and System Aspects; IP Multimedia Subsystem (IMS) media plane security (Release 9)", 3GPP STANDARD; 3GPP TR 33.828, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 6 April 2010 (2010-04-06), pages 1-81, XP050402474 discloses a method for implementing a secure communications session, wherein an encrypted connection between two parties is set up through a public switched telephone network media gateway (PSTN MGW), and wherein the public switched telephone network media gateway encrypts media streams sent to the called party using a first cryptographic key and decrypts the encrypted media streams sent from the called party using a second cryptographic key. This set-up is known in the art as "end-to-middle" encryption, as opposed to the establishment of a straightforward end-to-end encrypted link.

### Summary of the Invention

The technical problem required to be solved by the present invention is to provide a method and system for implementing security of Single Radio Voice Call Continuity (SRVCC), which enables a terminal to still be able to perform secure sessions after SRVCC handover.

In order to solve the above technical problem, the present invention provides a method for implementing security of single radio voice call continuity, which comprises:
after single radio voice call continuity handover, a calling party performing encrypted media stream interaction with a called party through a public switched telephone network media gateway; and
the public switched telephone network media gateway encrypting media streams sent to the called party and decrypting the encrypted media streams sent from the called party;
wherein, encryption keys in the public switched telephone network media gateway come from an enhanced mobile switch center.

Wherein, in the step of the public switched telephone network media gateway encrypting media streams sent to the called party and decrypting the encrypted media streams sent from the called party, the public switched telephone network media gateway uses a first key to encrypt the media streams sent to the called party, and uses a second key to decrypt the media streams sent from the called party; wherein, the first key is generated by the enhanced mobile switch center and notified to the public switched telephone network media gateway, and the second key is generated by the called party and notified to the public switched telephone network media gateway.

Wherein, a mode of the public switched telephone network media gateway acquiring the first key and the second key is: after the single radio voice call continuity handover, the enhanced mobile switch center generating the first key, adding a key attribute in session description protocol information sent to the called party, and carrying the first key in the key attribute; the called party generating the second key, adding a key attribute in session description protocol information sent to the enhanced mobile switch center, and carrying the second key in the key attribute.

In order to solve the above technical problem, the present invention further provides a system for implementing security of single radio voice call continuity, which comprises: a public switched telephone network media gateway, a calling party, a called party and an enhanced mobile switch center;
the public switched telephone network media gateway is configured to: use a first key to encrypt media streams sent to the called party, and use a second key to decrypt the media streams sent from the called party; wherein, the public switched telephone network media gateway acquires the first key from the enhanced mobile switch center;
the enhanced mobile switch center is configured to: generate the first key and notify the public switched telephone network media gateway of the first key; and
the called party is configured to: generate the second key and notify the public switched telephone network media gateway of the second key.

Wherein, the enhanced mobile switch center is configured to: add a key attribute in session description protocol information sent to the called party and carry the first key in the key attribute;
the called party is configured to: add a key attribute in session description protocol information sent to the enhanced mobile switch center and carry the second key in the key attribute.

In order to solve the above technical problem, the present invention further provides a method for implementing security of single radio voice call continuity, which comprises:
after a calling party performs single radio voice call continuity handover, an enhanced mobile switch center acquiring a valid ticket and media key information from a key management server, so that the calling party performs encrypted media stream interaction with a legal called party through a public switched telephone network media gateway; wherein, media keys in the public switched telephone network media gateway come from the enhanced mobile switch center.

Wherein, the step of an enhanced mobile switch center acquiring a valid ticket from a key management server comprises:
the enhanced mobile switch center sending a ticket request to the key management server, and carrying an indication of single radio voice call continuity handover, a calling party identity and a Service Centralization and Continuity Application Server (SCC AS) address corresponding to the calling party in the ticket request, the key management server querying the legal called party corresponding to the calling party from a corresponding SCC AS, using encryption keys based on shared keys between the key management server and the enhanced mobile switch center to encrypt the media key information, generating the valid ticket including the calling party identity and a legal called party identity, and sending the valid ticket to the enhanced mobile switch center.

Wherein, the step of an enhanced mobile switch center acquiring a valid ticket from a key management server, so that a calling party performs encrypted media stream interaction with a legal called party through a public switched telephone network media gateway comprises:
the enhanced mobile switch center sending the ticket request to the key management server, and carrying the indication of single radio voice call continuity handover and the SCC AS address corresponding to the calling party in the ticket request, the key management server sending a dedicated general ticket in a single radio voice call continuity handover condition to the enhanced mobile switch center, and setting the called party in the general ticket as a general address, the enhanced mobile switch center initiating a session request to the SCC AS, the SCC AS forwarding the session request to a called party corresponding to the calling party, the called party requesting the key management server for the media keys, and when acquiring that the called party is the legal called party from the SCC AS, the key management server notifying the public switched telephone network media gateway of the media key information through the legal called party.

Wherein, a mode of the key management server acquiring that the called party is the legal called party from the SCC AS is one of the following modes:
mode 1, the key management server sending a called party query message including the calling party identity to the SCC AS, the SCC AS sending a legal called party identity list corresponding to the calling party to the key management server, and when judging that an identity of the called party exists in the legal called party identity list, the key management server judging that the called party is the legal called party;
mode 2, the key management server sending the called party query message including the calling party identity and a called party identity to the SCC AS, and when judging that the called party is the legal called party, the SCC AS notifying the key management server that the called party is the legal called party.

In order to solve the above technical problem, the present invention further provides a system for implementing security of single radio voice call continuity, which comprises: an enhanced mobile switch center, a key management server, a public switched telephone network media gateway, a calling party and a called party;
the enhanced mobile switch center is configured to: after a calling party performs single radio voice call continuity handover, acquire a valid ticket and media key information from the key management server, and make the calling party perform encrypted media stream interaction with a legal called party through the public switched telephone network media gateway; wherein, the public switched telephone network media gateway obtains the media key information from the enhanced mobile switch center.

The system further comprises a Service Centralization and Continuity Application Server (SCC AS); wherein,
the enhanced mobile switch center is further configured to: send a ticket request to the key management server, and carry an indication of single radio voice call continuity handover, a calling party identity and a SCC AS address corresponding to the calling party in the ticket request;
the key management server is configured to: query the legal called party corresponding to the calling party from a corresponding SCC AS, use encryption keys based on shared keys between the key management server and the enhanced mobile switch center to encrypt the media key information, generate the valid ticket including the calling party identity and a legal called party identity, and send the valid ticket to the enhanced mobile switch center.

Wherein,
the enhanced mobile switch center is further configured to: send the ticket request to the key management server, and carry the indication of single radio voice call continuity handover and the SCC AS address corresponding to the calling party in the ticket request; after receiving a general ticket, initiate a session request to the SCC AS;
the key management server is further configured to: after receiving the ticket request from the enhanced mobile switch center, send a dedicated general ticket in a single radio voice call continuity handover condition to the enhanced mobile switch center, and set the called party in the general ticket as a general address; after receiving a media key request of the called party, and when acquiring that the called party is the legal called party from the SCC AS, notify the public switched telephone network media gateway of the media key information through the legal called party;
the SCC AS is configured to: after receiving the session request from the enhanced mobile switch center, forward the session request to the called party corresponding to the calling party;
the called party is configured to: request the key management server for media keys after receiving the session request; and
the public switched telephone network media gateway is configured to: serve as an intermediate node and maintain the calling party and the called party to perform the encrypted media stream interaction, encrypt media streams sent to the called party, and decrypt the encrypted media streams sent from the called party.

With the method for implementing secure SRVCC sessions provided by the present invention, a key negotiation mechanism can be provided, which enables a terminal to still be able to perform secure sessions after SRVCC handover.

### Brief Description of Drawings

FIG. 1 is a diagram of system architecture of the existing single radio voice call continuity.
FIG. 2 is a schematic diagram of composition structure of a Key Management System (KMS).
FIG. 3 is a schematic diagram of message interaction of IMS media plane security in the related art based on the KMS.
FIG. 4 is a flow diagram of the example 1 for implementing secure SRVCC handover session according to the scheme 1 of the present invention.
FIG. 5 is a flow diagram of the example 2 for implementing secure SRVCC handover session according to method 1 of the scheme 2 of the present invention.
FIG. 6 is a flow diagram of the example 3 for implementing secure SRVCC handover session according to method 2 of the scheme 2 of the present invention.
FIG. 7 is a flow diagram of the example 4 for implementing secure SRVCC handover session according to method 2 of the scheme 2 of the present invention.

### Preferred Embodiments of the Present Invention

The examples of the present invention will be described in detail in combination with the accompanying drawings below. It should be noted that the examples in the present invention and the characteristics in the examples can be optionally combined with each other in the condition of no conflict.

### Scheme 1

When a user performs handover and an eMSC initiates a new session request, no matter what kind of security modes are used before, the eMSC uniformly uses an SDES scheme ("Session Description Protocol Security Descriptions for Media Streams" is called as the SDES scheme based on the IETF standard RFC4568) to perform the subsequent media plane security protection. Specifically, a dedicated key attribute is expanded in a Session Description Protocol (SDP) and used to directly transmit media keys required to be used in SDP information.

In the scheme 1, a system for implementing secure single radio voice call continuity includes: a calling party, a called party, a Public Switched Telephone Network Media Gateway (PSTN MGW) and an enhanced mobile switch center.

The PSTN MGW is configured to: use a first key to encrypt media streams sent to the called party, and use a second key to decrypt the media streams sent from the called party; wherein, the PSTN MGW acquires the first key from the enhanced mobile switch center;
the enhanced mobile switch center is configured to: generate the first key and notify the PSTN MGW of the first key; and specifically, add a key attribute in session description protocol information sent to the called party and carry the first key in the key attribute;
the called party is configured to: generate the second key and notify the PSTN MGW of the second key; and specifically, add a key attribute in session description protocol information sent to the enhanced mobile switch center and carry the second key in the key attribute.

In the scheme 1, a Public Switched Telephone Network Media Gateway (PSTN MGW) for implementing secure single radio voice call continuity is configured to:
use a first key to encrypt media streams sent to a called party, and use a second key to decrypt the media streams sent from the called party; wherein, the first key is obtained by the PSTN MGW from an enhanced mobile switch center;
wherein, the PSTN MGW is configured to obtain the first key by receiving session description protocol information sent from the enhanced mobile switch center to the called party, and a key attribute is added in the session description protocol information and the first key is carried in the key attribute.

Wherein, the second key is generated by the called party and notified to the PSTN MGW; and specifically, a key attribute is added in session description protocol information sent from the called party to the enhanced mobile switch center and the second key is carried in the key attribute.

In the scheme 1, a method for implementing secure single radio voice call continuity includes: after single radio voice call continuity handover, a calling party performing encrypted media stream interaction with a called party through a Public Switched Telephone Network Media Gateway (PSTN MGW); the PSTN MGW encrypting media streams sent to the called party and decrypting the encrypted media streams sent from the called party; and encryption keys in the PSTN MGW come from an enhanced Mobile Switch Center (eMSC). Therefore, the media streams transmitted between the PSTN MGW and the called party are secure media streams, which guarantee the security of calls between the calling party and the called party.

The PSTN MGW uses a first key (K1) to encrypt the media streams sent to the called party, and uses a second key (K2) to decrypt the media streams sent from the called party; wherein, the first key is generated by the eMSC and notified to the PSTN MGW, and the second key is generated by the called party and notified to the PSTN MGW.

A mode of the PSTN MGW acquiring the first key and the second key is: after the single radio voice call continuity handover, the eMSC generating the first key, adding a key attribute in session description protocol information sent to the called party, and carrying the first key in the key attribute; the called party generating the second key, adding a key attribute in session description protocol information sent to the eMSC, and carrying the second key in the key attribute. For example, after the calling party (a user A) performs the single radio voice call continuity handover, the eMSC generates the first key (K1) used for encrypting the media streams sent from the calling party to the called party and places the first key (K1) in the key attribute of the session description protocol information to be sent to the called party, and the called party (a user B) generates the second key used for decrypting the media streams sent from the called party to the calling party (the user A) and places the second key in the key attribute of the session description protocol information to be sent to the eMSC, and the eMSC sends the first key and the second key to the PSTN MGW, and the PSTN MGW uses the first key (K1) to encrypt the media streams sent to the called party and uses the second key to decrypt the encrypted media streams sent from the called party.

FIG. 4 illustrates the example 1 of using the scheme 1 to implement secure SRVCC handover session, and the detailed steps are described as follows.

In step 401, after a user A performs SRVCC handover, an eMSC generates a first key K1, uses an SDES scheme to perform media plane security protection, names the SDES to be used to add a key attribute in a SDP message (specifically a Session Initiation Protocol INVITE (SIP INVITE) message) sent to an IMS network, and carries the K1 in the key attribute.

In steps 402-403, the eMSC forwards the received INVITE message to an SCC server through an intermediate network element of the IMS network.

In step 404, the SCC server finds a called party, namely a user B, according to the received SIP INVITE message, and forwards the INVITE message to the user B.

In step 405, the user B generates a second key K2, names the SDES to be used to add a key attribute in a SDP message (specifically a 200OK message) sent to the SCC server, and carries the K2 in the key attribute.

In steps 406-407, the SCC server forwards the received 2000K message to the eMSC through the intermediate network element of the IMS network.

In step 408, the eMSC sends the media keys K1 and K2 to a PSTN MGW through a Relay Call message, and indicates the PSTN MGW to use the K1 to encrypt media streams sent to the called party and to use the K2 to decrypt the encrypted media streams sent from the called party.

In step 409, the PSTN MGW uses the K1 to encrypt the media streams sent to the IMS network (i.e. the media streams sent from a calling party to the called party) in the media streams transmitted between the user A and user B, and uses the K2 to decrypt the media streams received from the IMS network (i.e. the media streams sent from the called party to the calling party) in the media streams transmitted between the user A and user B, thus all the media streams transmitted between the user A and user B are secure media streams.

In the above method, when sessions are performed with a CS user, the media streams are terminated at a PSTN gateway safely, and in a CS domain, the media streams are transmitted through Time Division Multiplexing (TDM) which meets requirements of IMS media plane security. Through the above process, after the user A performs handover, the media streams are protected between the PSTN MGW and user B, and all the media streams transmitted between the user A and user B are secure media streams.

### Scheme 2

When a KMS scheme of IMS media plane security in the existing 3GPP TS33.328 is used to perform secure communication between a calling party A and a called party B, the KMS scheme is stilled used, but an MSC can only obtain an SCC server address corresponding to the calling party A and a calling party ID, and it does not know an ID of the called party B and can not apply to the KMS for a valid ticket required to be used, which causes that a user A can not continue to use the KMS scheme to perform secure communication after performing SRVCC handover.

In the scheme 2, a system for implementing secure single radio voice call continuity includes: an enhanced mobile switch center, a key management server, a public switched telephone network media gateway, a calling party and a called party.

The enhanced mobile switch center is configured to: after a calling party performs single radio voice call continuity handover, acquire a valid ticket and media key information from the key management server, and make the calling party perform encrypted media stream interaction with a legal called party through the public switched telephone network media gateway. The public switched telephone network media gateway obtains the media key information from the enhanced mobile switch center.

The above system can be implemented through the following specific modes.

### Implementation mode 1

The enhanced mobile switch center is configured to: send a ticket request to the key management server, and carry an indication of single radio voice call continuity handover, a calling party identity and a Service Centralization and Continuity Application Server (SCC AS) address corresponding to the calling party in the ticket request;
the key management server is further configured to: query the legal called party corresponding to the calling party from a corresponding SCC AS, use encryption keys based on shared keys between the key management server and the enhanced mobile switch center to encrypt the media key information, generate the valid ticket including the calling party identity and a legal called party identity, and send the valid ticket to the enhanced mobile switch center.

### Implementation mode 2

The system further includes a Service Centralization and Continuity Application Server (SCC AS).

The enhanced mobile switch center is further configured to: send the ticket request to the key management server, and carry the indication of single radio voice call continuity handover and the SCC AS address corresponding to the calling party in the ticket request; and after receiving a general ticket, initiate a session request to the corresponding SCC AS;
the key management server is further configured to: after receiving the ticket request from the enhanced mobile switch center, send a dedicated general ticket in a single radio voice call continuity handover condition to the enhanced mobile switch center, and set the called party in the general ticket as a general address; after receiving a media key request of the called party, and when acquiring that the called party is the legal called party from the SCC AS, notify the public switched telephone network media gateway of the media key information through the legal called party;
the SCC AS is configured to: after receiving the session request from the enhanced mobile switch center, forward the session request to the called party corresponding to the calling party;
the called party is configured to: request the key management server for media keys after receiving the session request; and
the public switched telephone network media gateway is configured to: serve as an intermediate node and maintain the calling party and the called party to perform the encrypted media stream interaction, encrypt media streams sent to the called party, and decrypt the encrypted media streams sent from the called party.

With regard to this, in the scheme 2, a method for implementing secure single radio voice call continuity includes: after a calling party performs single radio voice call continuity handover, an enhanced mobile switch center acquiring a valid ticket and media key information from a key management server, so that the calling party performs encrypted media stream interaction with a legal called party through a public switched telephone network media gateway; wherein, media keys in the public switched telephone network media gateway come from the enhanced mobile switch center.

In the scheme 2, two implementation methods are specifically included.

In method 1, the process of an enhanced mobile switch center acquiring a valid ticket from a key management server includes: the enhanced mobile switch center sending a ticket request to the key management server, and carrying an indication of single radio voice call continuity handover, a calling party identity and a Service Centralization and Continuity Application Server (SCC AS) address corresponding to the calling party in the ticket request, the key management server acquiring that it is in the SRVCC handover condition currently, querying the legal called party corresponding to the calling party from a corresponding SCC AS, using encryption keys based on shared keys between the key management server and the enhanced mobile switch center to encrypt the media key information, generating the valid ticket including the calling party identity and a legal called party identity, and sending the valid ticket to the enhanced mobile switch center.

In method 2, the process of an enhanced mobile switch center acquiring a valid ticket from a key management server, so that a calling party perform encrypted media stream interaction with a legal called party through a public switched telephone network media gateway includes:
the enhanced mobile switch center sending the ticket request to the key management server, and carrying the indication of single radio voice call continuity handover and the SCC AS address corresponding to the calling party in the ticket request, the key management server sending a dedicated general ticket in a single radio voice call continuity handover condition to the enhanced mobile switch center, and setting the called party in the general ticket as a general address, the enhanced mobile switch center initiating a session request to the corresponding SCC AS, the SCC AS forwarding the session request to a called party corresponding to the calling party, and when acquiring that the called party is the legal called party from the SCC AS, the key management server notifying the public switched telephone network media gateway of the media key information through the legal called party.

Wherein, a mode of the key management server acquiring that the called party is the legal called party from the SCC AS is one of the following modes:
mode 1, the key management server sending a called party query message including the calling party identity to the SCC AS, the SCC AS sending a legal called party identity list corresponding to the calling party to the key management server, and when judging that an identity of the called party exists in the legal called party identity list, the key management server judging that the called party is the legal called party;
mode 2, the key management server sending the called party query message including the calling party identity and a called party identity to the SCC AS, and when judging that the called party is the legal called party, the SCC AS notifying the key management server that the called party is the legal called party.

Wherein, signaling interactions between the KMS and the SCC AS/eMSC all can be forwarded through third-party network elements, e.g. the signaling interactions can be forwarded through a BSF server.

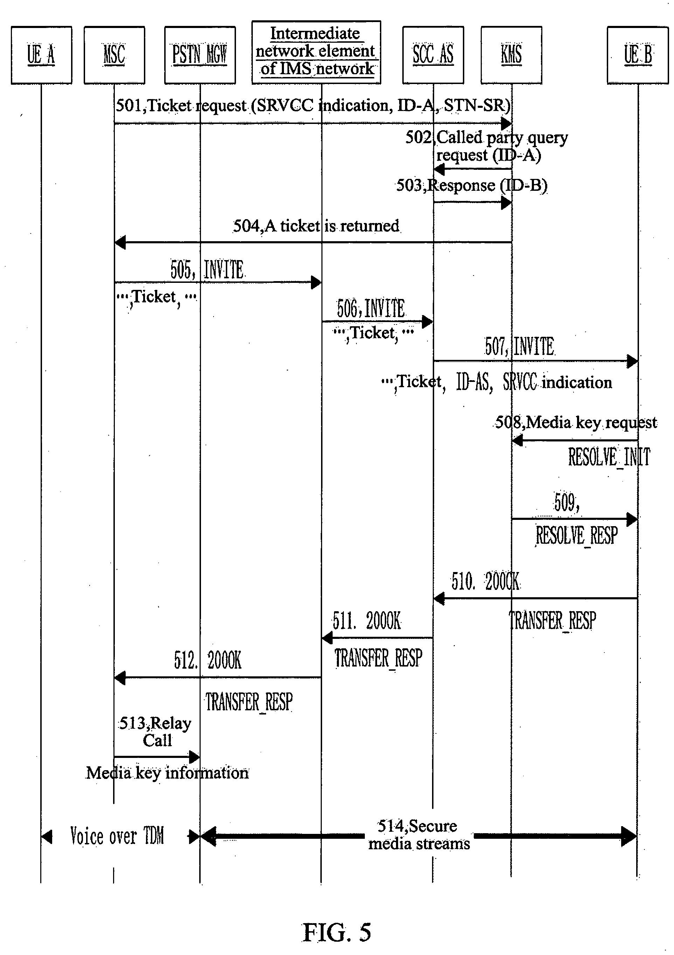

FIG. 5 illustrates the example 2 for implementing secure SRVCC handover session according to the method 1 of the scheme 2 of the present invention, and the detailed steps are described as follows.

In step 501, after a user A performs SRVCC handover, an eMSC sends a ticket request to a KMS, and carries an SRVCC indication, an ID of the user A (an ID-A) and a SCC AS address (STN-SR) corresponding to the user A in the ticket request.

In step 502, the KMS acquires that the requested ticket is required to be used for an SRVCC handover scenario through the SRVCC indication or the SCC AS address included in the message, and sends a called party query request to a corresponding SCC AS according to the STN-SR, wherein, the request includes a calling party ID, namely the ID-A.

In step 503, the SCC AS finds that a legal called party identity is an ID-B according to the calling party ID namely the ID-A, and carries the ID-B in a response message to be sent to the KMS.

Signaling interactions between the KMS and the SCC AS can be forwarded through third-party network elements such as a BSF, and establishment of trust relationships is not required between the KMS and the SCC AS at the point.

In step 504, after acquiring that the legal called party is a user B from the SCC AS, the KMS generates media key information, uses encryption keys based on shared keys of the eMSC to encrypt the media key information, uses authentication keys based on the shared keys of the eMSC to perform integrality protection, generates a valid ticket including the calling party ID and the legal called party identity, and sends the valid ticket to the eMSC.

In steps 505-506, the eMSC initiates a session request message (specifically an INVITE message) to the SCC AS through an intermediate network element of an IMS network and carries the ticket, and similar to the related art, the INVITE message includes a TRANSFER_INIT message.

In step 507, the SCC AS forwards the INVITE message to the user B, and carries the SRVCC indication in the INVITE message.

The following procedure is identical with the related art.

In step 508, the user B creates a media key request message (specifically a RESOLVE_INIT message), and the media key request message includes an identity of the user B (including a public user identity, and if the general authentication mechanism GBA is used in this process, also including a GBA identity, namely a BTID) besides the information received by the user B from the SCC AS, and the user B sends the media key request message to the KMS.

In step 509, the KMS performs processing according to the related art, and after determining that the user B is the legal called party, it returns a RESOLVE_RESP message including the media key information to the user B.

In step 510, the user B performs decryption to obtain the media key information, and generates a TRANSFER_RESP message which is contained in a 200OK message returned to the SCC AS.

In steps 511-512, the SCC AS forwards the 2000K message to the eMSC through the intermediate network element of the IMS network.

In step 513, the eMSC sends the media key information to a PSTN MGW through a Relay Call message, and orders the PSTN MGW to perform encryption and decryption processing on the media streams transmitted between the user A and user B.

In step 514, the PSTN MGW performs encryption and decryption processing on the media streams transmitted between the user A and user B.

In the above method, when sessions are performed with a CS user, the media streams are terminated at a PSTN gateway safely. With the above method, after the user A performs handover, the media streams are protected between the PSTN MGW and user B, and all the media streams transmitted between the user A and user B are secure media streams.

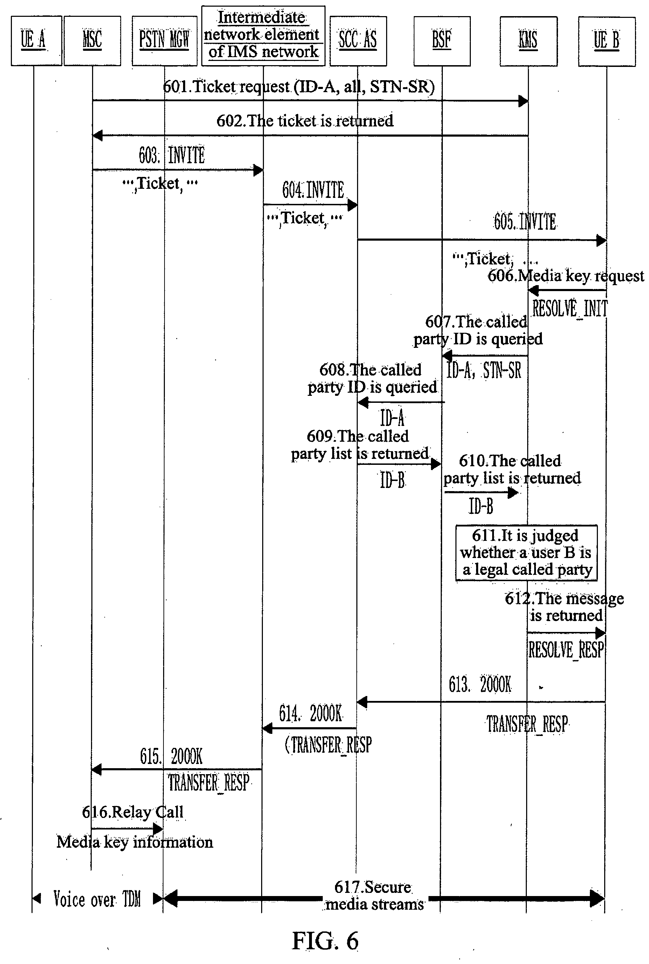

FIG. 6 illustrates the example 3 of using a called party query mode 1 when the secure SRVCC handover session is implemented according to the method 2 of the scheme 2, and the detailed steps are described as follows.

In step 601, after a user A performs SRVCC handover, an eMSC sends a ticket request to a KMS, and the ticket request includes an SRVCC indication, an ID of the user A (an ID-A) and a SCC AS address (STN-SR) corresponding to the user A.

In step 602, the KMS acquires that the requested ticket is required to be used for an SRVCC handover scenario through the SRVCC indication or the SCC AS address included in the message, and sends a dedicated general ticket in an SRVCC handover condition to the eMSC, which can specifically set an SRVCC flag bit in the ticket as 1 to indicate that this ticket is the dedicated general ticket in the SRVCC handover condition. Meanwhile, the KMS also sets a called party in the ticket as a general address (this general address can be a default address and a default format set by system, and also can be the SCC AS address STN-SR), and sets a calling party as an ID-A.

In steps 603-604, the eMSC initiates a session request (specifically an INVITE message) to an SCC AS through an intermediate network element of an IMS network, and carries the general ticket.

In step 605, the SCC AS finds a user B according to the ID-A, and forwards the INVITE message to the user B.

In step 606, the user B creates a media key request message (specifically a RESOLVE_INIT message), and the media key request message includes an identity of the user B (including a public user identity, and if the general authentication mechanism GBA is used in this process, also including a GBA identity, namely a BTID) besides the information received by the user B from the SCC AS, and the user B sends the media key request message to the KMS.

In step 607, after acquiring that the ticket is the general ticket of the SRVCC handover scenario by querying the SRVCC flag bit in the ticket, the KMS sends a called party query message to a third-party network element BSF, and the called party query message at least includes a calling party identity ID-A) and the SCC A address (STN-SR).

In step 608, the BSF finds a corresponding SCC AS according to the STN-SR and sends a called party query request to the SCC AS, and the called party query request at least includes the calling party identity (ID-A).

In step 609, the SCC AS queries the called party through the ID-A, and sends a queried legal called party identity list corresponding to the user A to the BSF.

In step 610, the BSF sends the received legal called party identity list to the KMS.

In step 611, when determining that the identity of the user B exists in the list, the KMS decrypts the media key information in the general ticket, and when the identity of the user B does not exist in the list, sessions are terminated.

In step 612, the KMS returns a message (specifically a RESOLVE_RESP message) including the media key information which is sent to the user B.

In step 613, the user B obtains the media key information, and generates a TRANSFER_RESP message which is contained in a 200OK message returned to the SCC AS.

In step 614, the SCC AS forwards the 200OK message to the intermediate network element of the IMS network.

In step 615, the intermediate network element of the IMS network forwards the 200OK message to the eMSC.

In step 616, the eMSC sends the media key information to a PSTN MGW through a Relay Call message, and orders the PSTN MGW to perform encryption and decryption processing on media streams transmitted between the user A and user B.

In step 617, the PSTN MGW performs encryption and decryption processing on the media streams transmitted between the user A and user B.

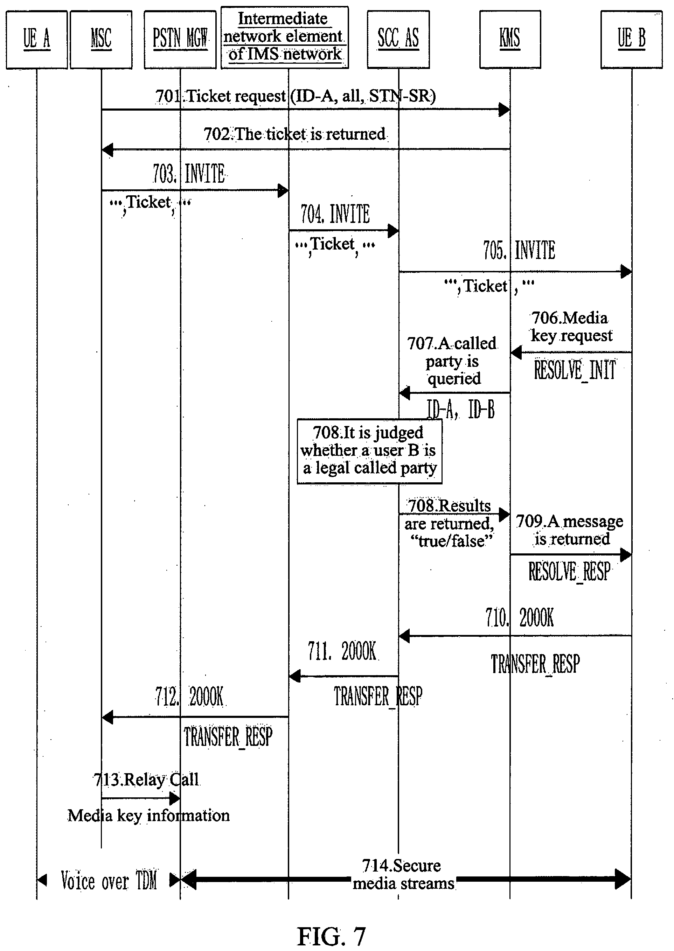

FIG. 7 illustrates the example 4 of using a called party query mode 2 when the secure SRVCC handover session is implemented according to the method 2 of the scheme 2, and the detailed steps are described as follows.

The steps 701-706 are identical with the steps 601-606 shown in FIG. 6, which will not be repeated here.

In step 707, the KMS finds a corresponding SCC AS according to the STN-SR and sends a called party query request to the SCC AS, and the called party query request at least includes the calling party identity (ID-A) and the identity of the user B (ID-B).

In step 708, the SCC AS judges whether the ID-B is a legal called party of the calling party A; if yes, it returns true information, and if no, it returns false information.

Signalings between the KMS and the SCC AS can be forwarded through third-party network elements.

In step 709, if the KMS receives the true message returned from the SCC AS, the KMS decrypts the media key information in the general ticket, and returns a message (specifically a RESOLVE_RESP message) including the media key information which is sent to the user B; and if the KMS receives the false message returned from the SCC AS, the KMS returns corresponding false information, and sessions are terminated.

In step 710, the user B obtains the media key information, and generates a TRANSFER_RESP message which is contained in a 200OK message returned to the SCC AS.

In step 711, the SCC AS forwards the 200OK message to the intermediate network element of the IMS network.

In step 712, the intermediate network element of the IMS network forwards the 200OK message to the eMSC.

In step 713, the eMSC sends the media key information to a PSTN MGW through a Relay Call message, and orders the PSTN MGW to perform encryption and decryption processing on media streams transmitted between the user A and user B.

In step 714, the PSTN MGW performs encryption and decryption processing on the media streams transmitted between the user A and user B.

Through the above process, the user B and the PSTN MGW can obtain corresponding media keys to perform secure sessions.

The above description is only the preferred examples of the present invention, which is not used to limit the protection scope of the present invention. All the modifications, equivalent substitutions, improvements and so on made within the spirit and principle of the present invention shall fall into the protection scope of the present invention.

The ordinary person skilled in the art can understand that all or part of the steps in the above method can be completed by program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in the form of hardware, and also can be implemented in the form of software function module. The present invention is not limited to any combination of hardware and software in a specific form.

### Industrial Applicability

With the present invention, a key negotiation mechanism can be provided, which enables a terminal to still be able to perform secure sessions after SRVCC handover.

## Claims

1. A method for implementing security of single radio voice call continuity (SRVCC), comprising:
after single radio voice call continuity handover, a calling party performing encrypted media stream interaction with a called party through a public switched telephone network media gateway; and
the public switched telephone network media gateway encrypting media streams sent to the called party and decrypting the encrypted media streams sent from the called party;
wherein, encryption keys in the public switched telephone network media gateway come from an enhanced mobile switch center;
wherein,
in the step of the public switched telephone network media gateway encrypting media streams sent to the called party and decrypting the encrypted media streams sent from the called party, the public switched telephone network media gateway uses a first key to encrypt the media streams sent to the called party, and uses a second key to decrypt the media streams sent from the called party; wherein, the first key is generated by the enhanced mobile switch center and notified to the public switched telephone network media gateway, and the second key is generated by the called party and notified to the public switched telephone network media gateway;
wherein,
a mode of the public switched telephone network media gateway acquiring the first key and the second key is: after the single radio voice call continuity handover, the enhanced mobile switch center generating the first key, adding a key attribute in session description protocol information sent to the called party, and carrying the first key in the key attribute; the called party generating the second key, adding a key attribute in session description protocol information sent to the enhanced mobile switch center, and carrying the second key in the key attribute.

2. A system for implementing security of single radio voice call continuity, comprising: a public switched telephone network media gateway, a calling party, a called party and an enhanced mobile switch center;
the public switched telephone network media gateway is configured to: use a first key to encrypt media streams sent to the called party, and use a second key to decrypt media streams sent from the called party; wherein, the public switched telephone network media gateway acquires the first key from the enhanced mobile switch center;
the enhanced mobile switch center is configured to: generate the first key and notify the public switched telephone network media gateway of the first key; and
the called party is configured to: generate the second key and notify the public switched telephone network media gateway of the second key; wherein,
the enhanced mobile switch center is configured to: add a key attribute in session description protocol information sent to the called party and carry the first key in the key attribute;
the called party is configured to: add a key attribute in session description protocol information sent to the enhanced mobile switch center and carry the second key in the key attribute.

3. The method for implementing security of single radio voice call continuity according to claim 1, comprising:
after a calling party performs single radio voice call continuity handover, an enhanced mobile switch center acquiring a valid ticket and media key information from a key management server, so that the calling party performs encrypted media stream interaction with a legal called party through a public switched telephone network media gateway; wherein, media keys in the public switched telephone network media gateway come from the enhanced mobile switch center.

4. The method according to claim 3, wherein,
the step of an enhanced mobile switch center acquiring a valid ticket from a key management server comprises:
the enhanced mobile switch center sending a ticket request to the key management server, and carrying an indication of single radio voice call continuity handover, a calling party identity and a Service Centralization and Continuity Application Server (SCC AS) address corresponding to the calling party in the ticket request, the key management server querying the legal called party corresponding to the calling party from a corresponding SCC AS, using encryption keys based on shared keys between the key management server and the enhanced mobile switch center to encrypt the media key information, generating the valid ticket including the calling party identity and a legal called party identity, and sending the valid ticket to the enhanced mobile switch center.

5. The method according to claim 4, wherein,
the step of an enhanced mobile switch center acquiring a valid ticket from a key management server, so that the calling party performs encrypted media stream interaction with a legal called party through a public switched telephone network media gateway comprises:
the enhanced mobile switch center sending a ticket request to the key management server, and carrying an indication of single radio voice call continuity handover and a SCC AS address corresponding to the calling party in the ticket request, the key management server sending a dedicated general ticket in a single radio voice call continuity handover condition to the enhanced mobile switch center, and setting a called party in the general ticket as a general address, the enhanced mobile switch center initiating a session request to SCC AS, the SCC AS forwarding the session request to a called party corresponding to the calling party, the called party requesting the key management server for the media keys, and when acquiring that the called party is the legal called party from the SCC AS, the key management server notifying the public switched telephone network media gateway of the media key information through the legal called party.

6. The method according to claim 5, wherein,
a mode of the key management server acquiring that the called party is the legal called party from the SCC AS is one of following modes:
mode 1, the key management server sending a called party query message including a calling party identity to the SCC AS, the SCC AS sending a legal called party identity list corresponding to the calling party to the key management server, and when judging that an identity of the called party exists in the legal called party identity list, the key management server judging that the called party is the legal called party;
mode 2, the key management server sending the called party query message including the calling party identity and a called party identity to the SCC AS, and when judging that the called party is the legal called party, the SCC AS notifying the key management server that the called party is the legal called party.

7. The system for implementing security of single radio voice call continuity according to claim 2, further comprising: a key management server;
the enhanced mobile switch center is configured to: after the calling party performs single radio voice call continuity handover, acquire a valid ticket and media key information from the key management server, so that the calling party performs encrypted media stream interaction with a legal called party through the public switched telephone network media gateway; wherein, the public switched telephone network media gateway obtains the media key information from the enhanced mobile switch center.

8. The system according to claim 7, further comprising: a Service Centralization and Continuity Application Server (SCC AS); wherein,
the enhanced mobile switch center is further configured to: send a ticket request to the key management server, and carry an indication of single radio voice call continuity handover, a calling party identity and a SCC AS address corresponding to the calling party in the ticket request;
the key management server is configured to: query the legal called party corresponding to the calling party from a corresponding SCC AS, use encryption keys based on shared keys between the key management server and the enhanced mobile switch center to encrypt the media key information, generate the valid ticket including the calling party identity and a legal called party identity, and send the valid ticket to the enhanced mobile switch center.

9. The system according to claim 7, wherein,
the enhanced mobile switch center is further configured to: send a ticket request to the key management server, and carry an indication of single radio voice call continuity handover and a SCC AS address corresponding to the calling party in the ticket request; after receiving a general ticket, initiate a session request to SCC AS;
the key management server is further configured to: after receiving the ticket request from the enhanced mobile switch center, send a dedicated general ticket in a single radio voice call continuity handover condition to the enhanced mobile switch center, and set the called party in the general ticket as a general address; after receiving a media key request of the called party, and when acquiring that the called party is the legal called party from the SCC AS, notify the public switched telephone network media gateway of the media key information through the legal called party;
the SCC AS is configured to: after receiving the session request from the enhanced mobile switch center, forward the session request to the called party corresponding to the calling party;
the called party is configured to: request the key management server for media keys after receiving the session request; and
the public switched telephone network media gateway is configured to: serve as an intermediate node and maintain the calling party and the called party to perform the encrypted media stream interaction, encrypt media streams sent to the called party, and decrypt the encrypted media streams sent from the called party.

## Patentansprüche

1. Verfahren zur Herstellung der Sicherheit einer Funksprachanrufkontinuität (Single Radio Voice Call Continuity, SRVCC), wobei das Verfahren umfasst:
nach einer Funksprachanrufkontinuitätsweiterreichung, Durchführen, durch einen anrufenden Teilnehmer, einer verschlüsselten Multimedialen Datenstrom-Interaktion mit einem angerufenen Teilnehmer über einen Netzübergang eines öffentlichen Fernsprechschaltnetzwerks (Public Switched Telephone Network Media Gateway); und
Verschlüsseln, durch den Netzübergang des öffentlichen Fernsprechschaltnetzwerks, von an den angerufenen Teilnehmer gesendeten Medienströmen und Entschlüsseln der von dem angerufenen Teilnehmer gesendeten Medienströme;
wobei die Schlüssel zur Verschlüsselung in dem Netzübergang des öffentlichen Fernsprechschaltnetzwerks von einer verbesserten Mobilfunkvermittlungsstelle (Enhanced Mobile Switch Center) kommen;
wobei bei dem Schritt des Verschlüsselns, durch den Netzübergang des öffentlichen Fernsprechschaltnetzwerks, von an den angerufenen Teilnehmer gesendeten Medienströmen und Entschlüsselns der von dem angerufenen Teilnehmer gesendeten Medienströme, der Netzübergang des öffentlichen Fernsprechschaltnetzwerks einen ersten Schlüssel verwendet, um an den angerufenen Teilnehmer gesendete Medienströme zu verschlüsseln, und einen zweiten Schlüssel verwendet, um von dem angerufenen Teilnehmer gesendete Medienströme zu entschlüsseln; wobei der erste Schlüssel von der verbesserten Mobilfunkvermittlungsstelle erzeugt wird und an den Netzübergang des öffentlichen Fernsprechschaltnetzwerks gegeben wird, und der zweite Schlüssel von dem angerufenen Teilnehmer erzeugt wird und an den Netzübergang eines öffentlichen Fernsprechschaltnetzwerks gegeben wird;
wobei ein Modus des Erhaltens des ersten und des zweiten Schlüssels durch den Netzübergang eines öffentlichen Fernsprechschaltnetzwerks wie folgt ist: nach der Funksprachanrufkontinuitätsweiterreichung erzeugt die verbesserte Mobilfunkvermittlungsstelle den ersten Schlüssel, fügt ein Schlüsselattribut zu den an den angerufenen Teilnehmer gesendeten Sitzungsbeschreibungs-Protokollinformationen hinzu, und transportiert den ersten Schlüssel in dem Schlüsselattribut; der angerufene Teilnehmer erzeugt den zweiten Schlüssel, fügt ein Schlüsselattribut zu den an die verbesserte Mobilfunkvermittlungsstelle gesendeten Sitzungsbeschreibungs-Protokollinformationen hinzu, und transportiert den zweiten Schlüssel in dem Schlüsselattribut.

2. System zur Herstellung der Sicherheit einer Funksprachanrufkontinuität (Single Radio Voice Call Continuity), wobei das System umfasst: einen Netzübergang eines öffentlichen Fernsprechschaltnetzwerks, einen anrufenden Teilnehmer, einen angerufenen Teilnehmer und eine verbesserte Mobilfunkvermittlungsstelle;
wobei der Netzübergang des öffentlichen Fernsprechschaltnetzwerks dazu konfiguriert ist, einen ersten Schlüssel zu verwenden, um an den angerufenen Teilnehmer gesendete Multimediale Datenströme zu verschlüsseln, und einen zweiten Schlüssel zu verwenden, um von dem angerufenen Teilnehmer gesendete Multimediale Datenströme zu entschlüsseln; wobei der Netzübergang des öffentlichen Fernsprechschaltnetzwerks den ersten Schlüssel von der verbesserten Mobilfunkvermittlungsstelle erhält;
wobei die verbesserte Mobilfunkvermittlungsstelle dazu konfiguriert ist, den ersten Schlüssel zu erzeugen und den ersten Schlüssel an den Netzübergang eines öffentlichen Fernsprechschaltnetzwerks zu geben; und
wobei der angerufene Teilnehmer dazu konfiguriert ist, den zweiten Schlüssel zu erzeugen und den zweiten Schlüssel an den Netzübergang des öffentlichen Fernsprechschaltnetzwerks zu geben, wobei:
die verbesserte Mobilfunkvermittlungsstelle dazu konfiguriert ist, ein Schlüsselattribut zu den an den angerufenen Teilnehmer gesendeten Sitzungsbeschreibungs-Protokollinformationen hinzuzufügen und den ersten Schlüssel in dem Schlüsselattribut zu transportieren;
der angerufene Teilnehmer dazu konfiguriert ist, ein Schlüsselattribut zu den an die verbesserte Mobilfunkvermittlungsstelle gesendeten Sitzungsbeschreibungs-Protokollinformationen hinzuzufügen und den zweiten Schlüssel in dem Schlüsselattribut zu transportieren.

3. Verfahren zur Herstellung der Sicherheit einer Funksprachanrufkontinuität (Single Radio Voice Call Continuity) gemäß Anspruch 1, wobei das Verfahren umfasst:
nachdem ein anrufender Teilnehmer eine Funksprachanrufkontinuitätsweiterreichung durchgeführt hat, Erhalten, durch eine verbesserte Mobilfunkvermittlungsstelle, eines gültigen Tickets und von Medienschlüsselinformationen von einem Schlüsselverwaltungsserver, so dass der anrufende Teilnehmer eine verschlüsselte Multimediale Datenstrom-Interaktion mit einem rechtmäßigen angerufenen Teilnehmer über einen Netzübergang eines öffentlichen Fernsprechschaltnetzwerks durchführt; wobei die Medienschlüssel in dem Netzübergang eines öffentlichen Fernsprechschaltnetzwerks von der verbesserten Mobilfunkvermittlungsstelle kommen.

4. Verfahren gemäß Anspruch 3, wobei der Schritt des Erhaltens, durch eine verbesserte Mobilfunkvermittlungsstelle, eines gültigen Tickets von einem Schlüsselverwaltungsserver umfasst:
die verbesserte Mobilfunkvermittlungsstelle sendet eine Ticketanforderung an den Schlüsselverwaltungsserver und transportiert einen Hinweis über die Funksprachanrufkontinuitätsweiterreichung, eine Identität des anrufenden Teilnehmers und eine Adresse eines Anwendungsservers für Dienstzentralisierung und Kontinuität (Service Centralization and Continuity Application Server, SCC AS), die mit dem anrufenden Teilnehmer in der Ticketanforderung übereinstimmt, der Schlüsselverwaltungsserver fragt den mit dem anrufenden Teilnehmer übereinstimmenden rechtmäßigen angerufenen Teilnehmer von einem übereinstimmenden SCC AS ab, verwendet Verschlüsselungsschlüssel basierend auf geteilten Schlüsseln zwischen dem Schlüsselverwaltungsserver und der verbesserten Mobilfunkvermittlungsstelle, um die Medienschlüsselinformationen zu verschlüsseln, erzeugt ein die Identität des anrufenden Teilnehmers und die Identität eines rechtmäßigen angerufenen Teilnehmers beinhaltendes gültiges Ticket, und sendet das gültige Ticket an die verbesserte Mobilfunkvermittlungsstelle.

5. Verfahren gemäß Anspruch 4, wobei der Schritt des Erhaltens, durch eine verbesserte Mobilfunkvermittlungsstelle, eines gültigen Tickets von einem Schlüsselverwaltungsserver, so dass der anrufende Teilnehmer eine verschlüsselte Multimediale Datenstrom-Interaktion mit einem rechtmäßigen angerufenen Teilnehmer über einen Netzübergang eines öffentlichen Fernsprechschaltnetzwerks durchführt, umfasst:
die verbesserte Mobilfunkvermittlungsstelle sendet eine Ticketanforderung an den Schlüsselverwaltungsserver und transportiert einen Hinweis über die Funksprachanrufkontinuitätsweiterreichung und eine Adresse eines SCC AS, die mit dem anrufenden Teilnehmer in der Ticketanforderung übereinstimmt; der Schlüsselverwaltungsserver sendet ein bestimmtes allgemeines Ticket in einer Funksprachanrufkontinuitätsweiterreichungsbedingung an die verbesserte Mobilfunkvermittlungsstelle und setzt einen angerufenen Teilnehmer in dem allgemeinen Ticket als allgemeine Adresse ein; die verbesserte Mobilfunkvermittlungsstelle initiiert eine Sitzungsanforderung an den SCC AS; der SCC AS leitet die Sitzungsanforderung an einen mit dem anrufenden Teilnehmer übereinstimmenden angerufenen Teilnehmer; der angerufene Teilnehmer fordert die Medienschlüssel bei dem Schlüsselverwaltungsserver an; und wenn festgestellt wird, von dem SCC AS, dass der angerufene Teilnehmer der rechtmäßige angerufene Teilnehmer ist, gibt der Schlüsselverwaltungsserver durch den rechtmäßigen angerufenen Teilnehmer die Medienschlüsselinformationen an den Netzübergang eines öffentlichen Fernsprechschaltnetzwerks weiter.

6. Verfahren gemäß Anspruch 5, wobei es sich bei einem Modus des Feststellens, durch den SCC AS, dass der angerufene Teilnehmer der rechtmäßige angerufene Teilnehmer ist, um einen der folgenden Modi handelt:
Modus 1: der Schlüsselverwaltungsserver sendet eine Abfragemitteilung über einen angerufenen Teilnehmer, welche die Identität eines anrufenden Teilnehmers beinhaltet, an den SCC AS, der SCC AS sendet eine mit dem anrufenden Teilnehmer übereinstimmende Identitätsliste des rechtmäßigen angerufenen Teilnehmers an den Schlüsselverwaltungsserver, und wenn geurteilt wird, dass die Identität des angerufenen Teilnehmers in der Identitätsliste des rechtmäßigen angerufenen Teilnehmers existiert, urteilt der Schlüsselverwaltungsserver, dass es sich bei dem angerufenen Teilnehmer um den rechtmäßigen angerufenen Teilnehmer handelt;
Modus 2: der Schlüsselverwaltungsserver sendet eine Abfragemitteilung über einen angerufenen Teilnehmer, welche die Identität des anrufenden Teilnehmers und die Identität eines anrufenden Teilnehmers beinhaltet, an den SCC AS, und wenn geurteilt wird, dass es sich bei dem angerufenen Teilnehmer um den rechtmäßigen angerufenen Teilnehmer handelt, weist der SCC AS den Schlüsselverwaltungsserver darauf hin, dass es sich bei dem angerufenen Teilnehmer um den rechtmäßigen angerufenen Teilnehmer handelt.

7. System zur Herstellung der Sicherheit einer Funksprachanrufkontinuität (Single Radio Voice Call Continuity) gemäß Anspruch 2, wobei das System weiterhin einen Schlüsselverwaltungsserver umfasst;
wobei die verbesserte Mobilfunkvermittlungsstelle dazu konfiguriert ist, nachdem der anrufende Teilnehmer eine Funksprachanrufkontinuitätsweiterreichung durchgeführt hat, ein gültiges Ticket und Medienschlüsselinformationen von dem Schlüsselverwaltungsserver zu erhalten, so dass der anrufende Teilnehmer eine verschlüsselte Multimediale Datenstrom-Interaktion mit einem rechtmäßigen angerufenen Teilnehmer über den Netzübergang eines öffentlichen Fernsprechschaltnetzwerks durchführt; wobei der Netzübergang des öffentlichen Fernsprechschaltnetzwerks die Medienschlüsselinformationen von der verbesserten Mobilfunkvermittlungsstelle erhält.

8. System gemäß Anspruch 7, das weiterhin umfasst: einen Anwendungsserver für Dienstzentralisierung und Kontinuität (Service Centralization and Continuity Application Server, SCC AS); wobei:
die verbesserte Mobilfunkvermittlungsstelle weiterhin dazu konfiguriert ist, eine Ticketanforderung an den Schlüsselverwaltungsserver zu senden und einen Hinweis über die Funksprachanrufkontinuitätsweiterreichung, die Identität eines anrufenden Teilnehmers und die Adresse eines SCC AS, die mit dem anrufenden Teilnehmer in der Ticketanforderung übereinstimmt, zu transportieren;
der Schlüsselverwaltungsserver dazu konfiguriert ist, den mit dem anrufenden Teilnehmer übereinstimmenden rechtmäßigen angerufenen Teilnehmer von einem übereinstimmenden SCC AS abzufragen, Schlüssel zur Verschlüsselung basierend auf geteilten Schlüsseln zwischen dem Schlüsselverwaltungsserver und der verbesserten Mobilfunkvermittlungsstelle zu verwenden, um die Medienschlüsselinformationen zu verschlüsseln, das die Identität des anrufenden Teilnehmers und die Identität eines rechtmäßigen angerufenen Teilnehmers beinhaltende gültige Ticket zu erzeugen und das gültige Ticket an die verbesserte Mobilfunkvermittlungsstelle zu senden.

9. System gemäß Anspruch 7, wobei:
die verbesserte Mobilfunkvermittlungsstelle weiterhin dazu konfiguriert ist, eine Ticketanforderung an den Schlüsselverwaltungsserver zu senden und einen Hinweis über die Funksprachanrufkontinuitätsweiterreichung und eine Adresse eines SCC AS, die mit dem anrufenden Teilnehmer in der Ticketanforderung übereinstimmt, zu transportieren; nach dem Empfang eines allgemeinen Tickets, eine Sitzungsanforderung an den SCC AS zu initiieren;
der Schlüsselverwaltungsserver weiterhin dazu konfiguriert ist, nach dem Empfang des Ticketanforderung von der verbesserten Mobilfunkvermittlungsstelle, ein bestimmtes allgemeines Ticket in einer Funksprachanrufkontinuitätsweiterreichungsbedingung an die verbesserte Mobilfunkvermittlungsstelle zu senden und einen angerufenen Teilnehmer in dem allgemeinen Ticket als allgemeine Adresse einzusetzen; nach dem Empfang einer Medienschlüsselanforderung des angerufenen Teilnehmers und wenn festgestellt wird, von dem SCC AS, dass der angerufene Teilnehmer der rechtmäßige angerufene Teilnehmer ist, durch den rechtmäßigen angerufenen Teilnehmer die Medienschlüsselinformationen an den Netzübergang eines öffentlichen Fernsprechschaltnetzwerks weiter zu geben;
der SCC AS dazu konfiguriert ist, nach dem Empfang der Sitzungsanforderung von der verbesserten Mobilfunkvermittlungsstelle, die Sitzungsanforderung an den mit dem anrufenden Teilnehmer übereinstimmenden angerufenen Teilnehmer weiterzuleiten;
der angerufene Teilnehmer dazu konfiguriert ist, nach dem Empfang der Sitzungsanforderung Medienschlüssel bei dem Schlüsselverwaltungsserver anzufordern; und
der Netzübergang des öffentlichen Fernsprechschaltnetzwerks dazu konfiguriert ist, als Zwischenknoten zu dienen und den anrufenden Teilnehmer sowie den angerufenen Teilnehmer zu halten, um die verschlüsselte Multimediale Datenstrom-Interaktion durchzuführen, an den angerufenen Teilnehmer gesendete Multimediale Datenströme zu verschlüsseln, und von dem angerufenen Teilnehmer gesendete verschlüsselte Multimediale Datenströme zu entschlüsseln.

## Revendications

1. Procédé de mise en oeuvre de la sécurité de la continuité d'un appel radiotéléphonique unique (single radio voice call continuity, SRVCC), dans lequel :
après un transfert de continuité d'appel radiotéléphonique unique, un appelant réalise une interaction par flux multimédias chiffrés avec un appelé par l'intermédiaire d'une passerelle multimédia de réseau téléphonique public commuté, et
la passerelle multimédia de réseau téléphonique public commuté chiffre des flux multimédias envoyés à l'appelé et déchiffre les flux multimédias chiffrés envoyés par l'appelé ;
les clés de chiffrement de la passerelle multimédia de réseau téléphonique public commuté proviennent d'un centre de commutation mobile perfectionné ;
étant entendu que
au cours de l'étape dans laquelle la passerelle multimédia de réseau téléphonique public commuté chiffre les flux multimédias envoyés à l'appelé et déchiffre les flux multimédias chiffrés envoyés par l'appelé, la passerelle multimédia de réseau téléphonique public commuté emploie une première clé pour chiffrer les flux multimédias envoyés à l'appelé, et emploie une deuxième clé pour déchiffrer les flux multimédias envoyés par l'appelé ; étant entendu que la première clé est générée par le centre de commutation mobile perfectionné et notifiée auprès de la passerelle multimédia de réseau téléphonique public commuté, et la deuxième clé est générée par l'appelé et notifiée auprès de la passerelle multimédia de réseau téléphonique public commuté ;
étant entendu que
un mode de la passerelle multimédia de réseau téléphonique public commuté obtenant la première clé et la deuxième clé veut que : après le transfert de continuité d'appel radiotéléphonique unique, le centre de commutation mobile perfectionné génère la première clé, ajoute un attribut de clé à des informations de protocole de description de session envoyées à l'appelé, et porte la première clé dans l'attribut de clé ; l'appelé génère la deuxième clé, ajoute un attribut de clé à des informations de protocole de description de session envoyées au centre de commutation mobile perfectionné, et porte la deuxième clé dans l'attribut de clé.

2. Système de mise en oeuvre de la sécurité de la continuité d'un appel radiotéléphonique unique, comprenant : une passerelle multimédia de réseau téléphonique public commuté, un appelant, un appelé et un centre de commutation mobile perfectionné ;
la passerelle multimédia de réseau téléphonique public commuté étant configurée pour : employer une première clé pour chiffrer les flux multimédias envoyés à l'appelé, et employer une deuxième clé pour déchiffrer les flux multimédias envoyés par l'appelé ; ladite passerelle multimédia de réseau téléphonique public commuté obtenant la première clé de la part du centre de commutation mobile perfectionné ;
le centre de commutation mobile perfectionné étant configuré pour : générer la première clé et notifier la première clé auprès de la passerelle multimédia de réseau téléphonique public commuté ; et
l'appelé étant configuré pour : générer la deuxième clé et notifier la deuxième clé auprès de la passerelle multimédia de réseau téléphonique public commuté ;
étant entendu que
le centre de commutation mobile perfectionné est configuré pour : ajouter un attribut de clé à des informations de protocole de description de session envoyées à l'appelé et porter la première clé dans l'attribut de clé ;
l'appelé est configuré pour : ajouter un attribut de clé à des informations de protocole de description de session envoyées au centre de commutation mobile perfectionné et porter la deuxième clé dans l'attribut de clé.

3. Procédé de mise en oeuvre de la sécurité de la continuité d'un appel radiotéléphonique unique selon la revendication 1, dans lequel :
après qu'un appelant a réalisé un transfert de continuité d'appel radiotéléphonique unique, un centre de commutation mobile perfectionné obtient un ticket valide et des informations de clé multimédia de la part d'un serveur de gestion de clé, pour que l'appelant réalise une interaction par flux multimédias chiffrés avec un appelé légitime par l'intermédiaire d'une passerelle multimédia de réseau téléphonique public commuté ; lesdites clés multimédias de la passerelle multimédia de réseau téléphonique public commuté provenant du centre de commutation mobile perfectionné.

4. Procédé selon la revendication 3, dans lequel :
l'étape au cours de laquelle un centre de commutation mobile perfectionné obtient un ticket valide de la part d'un serveur de gestion de clé comprend le fait que :
le centre de commutation mobile perfectionné envoie une demande de ticket au serveur de gestion de clé, et porte une indication de transfert de continuité d'appel radiotéléphonique unique, une identité d'appelant et une adresse de serveur d'application de continuité et de centralisation de service (Service Centralization and Continuity Application Server, SCC AS) correspondant à l'appelant dans la demande de ticket, le serveur de gestion de clé effectue une requête concernant l'appelé légitime correspondant à l'appelant auprès d'un SCC AS correspondant, emploie des clés de chiffrement en fonction des clés partagées entre le serveur de gestion de clé et le centre de commutation mobile perfectionné pour chiffrer les informations de clé multimédia, génère le ticket valide comportant l'identité de l'appelant et l'identité de l'appelé légitime, et envoie le ticket valide au centre de commutation mobile perfectionné.

5. Procédé selon la revendication 4, dans lequel :
l'étape au cours de laquelle un centre de commutation mobile perfectionné obtient un ticket valide de la part d'un serveur de gestion de clé, pour que l'appelant réalise une interaction par flux multimédias chiffrés avec un appelé légitime par l'intermédiaire d'une passerelle multimédia de réseau téléphonique public commuté comprend le fait que :
le centre de commutation mobile perfectionné envoie une demande de ticket au serveur de gestion de clé, et porte une indication du transfert de continuité d'appel radiotéléphonique unique et une adresse du SCC AS correspondant à l'appelant dans la demande de ticket, le serveur de gestion de clé envoie un ticket général spécialisé sous une condition de transfert de continuité d'appel radiotéléphonique unique auprès du centre de commutation mobile perfectionné, et établit un appelé dans le ticket général en tant qu'adresse générale, le centre de commutation mobile perfectionné lance une demande de session auprès du SCC AS, le SCC AS transmet la demande de session auprès d'un appelé correspondant à l'appelant, l'appelé demande au serveur de gestion de clé les clés multimédias, et lors de la détermination que l'appelé est l'appelé légitime auprès du SCC AS, le serveur de gestion de clé notifie les informations de clé multimédia auprès de la passerelle multimédia de réseau téléphonique public commuté, par le biais de l'appelé légitime.

6. Procédé selon la revendication 5, dans lequel :
un mode du serveur de gestion de clé déterminant que l'appelé est l'appelé légitime auprès du SCC AS est l'un des modes suivants :
mode 1, le serveur de gestion de clé envoie un message de demande d'appelé comportant une identité d'appelant à destination du SCC AS, le SCC AS envoie une liste d'identité d'appelé légitime correspondant à l'appelant à destination du serveur de gestion de clé, et lors de la conclusion que l'identité de l'appelé existe dans la liste d'identité d'appelé légitime, le serveur de gestion de clé conclut que l'appelé est l'appelé légitime ;
mode 2, le serveur de gestion de clé envoie le message de demande d'appelé comportant l'identité de l'appelant et l'identité d'un appelé à destination du SCC AS, et s'il est conclu que l'appelé est l'appelé légitime, le SCC AS notifie au serveur de gestion de clé que l'appelé est l'appelé légitime.

7. Système de mise en oeuvre de la sécurité de la continuité d'un appel radiotéléphonique unique selon la revendication 2, comprenant en outre : un serveur de gestion de clé ;
le centre de commutation mobile perfectionné étant configuré pour : après que l'appelant a réalisé un transfert de continuité d'appel radiotéléphonique unique, obtenir un ticket valide et des informations de clé multimédia auprès du serveur de gestion de clé, pour que l'appelant réalise une interaction par flux multimédias chiffrés avec un appelé légitime par l'intermédiaire de la passerelle multimédia de réseau téléphonique public commuté ; ladite passerelle multimédia de réseau téléphonique public commuté obtenant les informations de clé multimédia auprès du centre de commutation mobile perfectionné.

8. Système selon la revendication 7, comprenant en outre : un serveur d'application de continuité et de centralisation de service (Service Centralization and Continuity Application Server, SCC AS), et dans lequel :
le centre de commutation mobile perfectionné est configuré en outre pour : envoyer une demande de ticket auprès du serveur de gestion de clé, et porter une indication du transfert de continuité d'appel radiotéléphonique unique, une identité d'appelant et une adresse du SCC AS correspondant à l'appelant dans la demande de ticket ;
le serveur de gestion de clé est configuré pour : effectuer une requête concernant l'appelé légitime correspondant à l'appelant auprès d'un SCC AS correspondant, utiliser des clés de chiffrement en fonction des clés partagées entre le serveur de gestion de clé et le centre de commutation mobile perfectionné pour chiffrer les informations de clé multimédia, générer le ticket valide comportant l'identité de l'appelant et l'identité d'un appelé légitime, et envoyer le ticket valide au centre de commutation mobile perfectionné.

9. Système selon la revendication 7, dans lequel :
le centre de commutation mobile perfectionné est configuré en outre pour : envoyer une demande de ticket auprès du serveur de gestion de clé, et porter une indication de transfert de continuité d'appel radiotéléphonique unique et une adresse du SCC AS correspondant à l'appelant dans la demande de ticket, et, après réception d'un ticket général, lancer une demande de session auprès du SCC AS ;
le serveur de gestion de clé est configuré en outre pour : après réception de la demande de ticket provenant du centre de commutation mobile perfectionné, envoyer un ticket général spécialisé sous une condition de transfert de continuité d'appel radiotéléphonique unique au centre de commutation mobile perfectionné, et établir l'appelé dans le ticket général en tant qu'adresse générale ; après réception d'une demande de clé multimédia de l'appelé, et lors de la détermination du fait que l'appelé est l'appelé légitime auprès du SCC AS, notifier les informations de clé multimédia auprès de la passerelle multimédia de réseau téléphonique public commuté, par le biais de l'appelé légitime ;
le SCC AS est configuré pour : après réception de la demande de session en provenance du centre de commutation mobile perfectionné, transmettre la demande de session auprès de l'appelé correspondant à l'appelant ;
l'appelé est configuré pour : demander les clés multimédias auprès du serveur de gestion de clé, après avoir reçu la demande de session ; et
la passerelle multimédia de réseau téléphonique public commuté est configurée pour : servir de noeud intermédiaire et maintenir l'appelant et l'appelé afin qu'ils réalisent l'interaction par flux multimédias chiffrés, chiffrer les flux multimédias envoyés à l'appelé, et déchiffrer les flux multimédias chiffrés envoyés par l'appelé.
